(19) Europäisches Patentamt
European Patent Office
Office européen des brevets

(11) Veröffentlichungsnummer: **0 479 842 B1**

# (12) EUROPÄISCHE PATENTSCHRIFT

(45) Veröffentlichungstag der Patentschrift: **31.08.94**

(51) Int. Cl.$^{5}$: **C09B 1/467**

(21) Anmeldenummer: **90909693.5**

(22) Anmeldetag: **27.06.90**

(86) Internationale Anmeldenummer:
**PCT/EP90/01030**

(87) Internationale Veröffentlichungsnummer:
**WO 91/00317 (10.01.91 91/02)**

## (54) VERFAHREN ZUR HERSTELLUNG VON ANTHRACHINONFARBSTOFFEN.

(30) Priorität: **30.06.89 DE 3921451**

(43) Veröffentlichungstag der Anmeldung:
**15.04.92 Patentblatt 92/16**

(45) Bekanntmachung des Hinweises auf die Patenterteilung:
**31.08.94 Patentblatt 94/35**

(84) Benannte Vertragsstaaten:
**CH DE FR GB IT LI**

(56) Entgegenhaltungen:
**DE-B- 1 099 543**
**DE-B- 1 149 476**

(73) Patentinhaber: **BASF Aktiengesellschaft**
**Carl-Bosch-Strasse 38**
**D-67063 Ludwigshafen (DE)**

(72) Erfinder: **HELWIG, Reinhard**
**Theodor-Storm-Strasse 27**
**D-6718 Gruenstadt (DE)**
Erfinder: **HOCH, Helmut**
**Am Wingertsberg 14**
**D-6719 Weisenheim (DE)**
Erfinder: **EPPLE, Gerhard**
**Am Mahlstein 3**
**D-6719 Weisenheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 479 842 B1

## Beschreibung

Die vorliegende Erfindung betrifft ein verbessertes Verfahren zur Herstellung von Anthrachinonfarbstoffen der allgemeinen Formel I

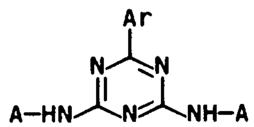

I

in der Ar für eine Arylgruppe steht und die Reste A Anthrachinonylreste bedeuten, durch Umsetzung eines Aryldihalogentriazins der allgemeinen Formel II

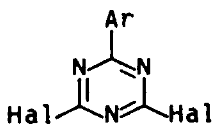

II

in der Hal Chlor oder Brom bedeutet, mit einem Aminoanthrachinon III

A-$NH_2$ III

in einem organischen Lösungsmittel.

Anthrachinonfarbstoffe der Formel I gehören zu der bedeutenden Gruppe der Küpenfarbstoffe.

Wie bereits aus den DE-PS 551 884, 637 937 und 10 26 456 bekannt ist, sind die Farbstoffe I durch Umsetzung der Aryldichlortriazine II mit den Aminoanthrachinonen III in einem hochsiedenden aromatischen Lösungsmittel wie Nitrobenzol, Di- oder Trichlorbenzol erhältlich. Die hierbei erzielbaren Ausbeuten von 85 bis 90 % sind jedoch unbefriedigend.

Versuche, das Verfahren durch Mitverwendung von Basen und eines Kupfer(I)-Amin-Katalysators zu verbessern (DE-PS 17 95 102), hatten nur begrenzten Erfolg und führten im Falle des besonders wichtigen Farbstoffs Vat Blue 66 (Ar = Phenyl, A = 1-Amino-2-acetylanthrachinon-4-yl) sogar nur zu einer Ausbeute von 53 %.

Der Erfindung lag daher die Aufgabe zugrunde, die Farbstoffe I in besseren Ausbeuten und in verfahrenstechnisch wirtschaftlicherer Weise zugänglich zu machen.

Demgemäß wurde ein Verfahren zur Herstellung von Anthrachinonfarbstoffen der allgemeinen Formel I

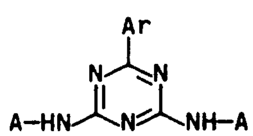

I

in der Ar für eine Arylgruppe steht und die Reste A Anthrachinonylreste bedeuten, durch Umsetzung eines Aryldihalogentriazins der allgemeinen Formel II

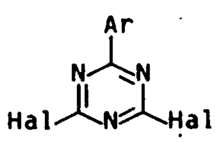

II

in der Hal Chlor oder Brom bedeutet, mit einem Aminoanthrachinon III

A-$NH_2$ III

in einem organischen Lösungsmittel gefunden, welches dadurch gekennzeichnet ist, daß man hierfür als

Lösungsmittel N-$C_1$-$C_4$-Alkylpyrrolid-2-one oder N-$C_1$-$C_4$-Alkylpiperid-2-one, N-Di-$C_1$-$C_4$-alkylacetamide oder N-Di-$C_1$-$C_4$-alkylpropionsäureamide oder Harnstoffderivate der Formel IV

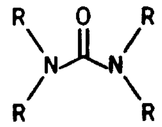

IV

in der die Reste R gleiche oder verschiedene Alkylgruppen mit 1 bis 4 C-Atomen bedeuten, die auch unter Ausbildung eines die Harnstoffgruppierung enthaltenden 5- oder 6-gliedrigen Ringes miteinander verbunden sein können, verwendet.

Als erfindungsgemäß zu verwendende Lösungsmittel eignen sich

- N-$C_1$-$C_4$-Alkylpyrrolid-2-one wie N-Ethyl-, N-n-Propyl-, N-Isopropyl- oder N-n-Butylpyrrolidon, vorzugsweise N-Methylpyrrolidon,
- N-$C_1$-$C_4$-Alkylpiperid-2-one wie N-Ethyl-, N-n-Propyl-, N-Isopropyl- oder N-n-Butylpiperidon, vorzugsweise N-Methylpiperidon,
- Harnstoffderivate der Formel IV mit 4 gleichen oder verschiedenen $C_1$-$C_4$-Alkylgruppen als Resten R wie Tetra-n-propyl-, Tetra-n-butyl- oder Dimethyldiethylharnstoff, vorzugsweise Tetramethyl- oder Tetraethylharnstoff, oder mit Resten R, die unter Ausbildung eines die Harnstoffgruppierung enthaltenden 5- oder 6-gliedrigen Ringes miteinander zu Ethylen- oder Propylenharnstoffen verbunden sind, wie 1,3-Diethyl-, 1,3-Dipropylimidazolidin-2-on oder 1,3-Diethyl-, 1,3-Dipropyltetrahydro-2(1H)-pyrimidinon, vorzugsweise 1,3-Dimethylimidazolidin-2-on oder 1,3-Dimethyltetrahydro-2(1H)-pyrimidinon, und
- N-Di-$C_1$-$C_4$-alkylacetamide oder -propionsäureamide wie Diethyl-, Di-n-propyl-, Di-n-butylacetamid oder Dimethyl-, Diethyl-, Di-n-propyl-, Di-n-butylpropionsäureamid, vorzugsweise Dimethylacetamid.

Diese Lösungsmittel zeichnen sich durch ihr hohes Lösevermögen für die Ausgangsstoffe des Verfahrens aus. So beträgt die Menge an Lösungsmittel in der Regel nur 2 bis 6, vorzugsweise 2,5 bis 4 kg pro kg III.

Die Umsetzung kann auch in Gegenwart Säurebindender Mittel wie der Alkalisalze schwacher Säuren, beispielsweise Natriumacetat, Natriumcarbonat oder Kaliumcarbonat, durchgeführt werden.

Des weiteren kann auch ein Katalysator in Form einer Additionsverbindung aus Kupfer(I)-iodid oder -bromid mit einer tertiären Base wie Triethylamin, Pyridin oder verwandten Verbindungen mitverwendet werden.

Die Ausgangsverbindungen II und III sind bekannt oder nach bekannten Methoden erhältlich. Das Molverhältnis von II zu III beträgt zweckmäßigerweise 0,5:1 bis 1:1, besonders 0,6:1 bis 0,8:1.

Im allgemeinen führt man die Reaktion bei 80 bis 200 °C, vorzugsweise bei 100 bis 160 °C durch. Die Reaktionspartner können wahlweise vor oder nach Erreichen der Reaktionstemperatur zusammengegeben werden. Es ist auch möglich, die Temperatur während der Reaktion zu erhöhen, um eine vollständige Umsetzung zu erreichen.

Die Umsetzung wird im allgemeinen bei Normaldruck vorgenommen, man kann aber auch bei vermindertem Druck arbeiten.

Die Reaktionszeiten betragen einschließlich der Nachrührzeiten in der Regel 5 bis 12, vorzugsweise 6 bis 8 Stunden.

Die Aufarbeitung des Reaktionsgemisches auf die Verfahrensprodukte nimmt man wie üblich vor, und zwar vorzugsweise indem man die Lösung abkühlt und die hierbei ausfallenden Farbstoffe I abtrennt und wäscht oder indem man das Lösungsmittel vom Reaktionsgemisch abdestilliert.

Man erhält die Farbstoffe I in sehr hoher Reinheit und deutlich besserer Ausbeute als bisher.

Da das Lösungsmittel nach Abtrennen der Farbstoffe I in wasserfreier oder zumindest wasserarmer Form anfällt und somit gut regenerierbar ist, bleibt zudem die Abwasserbelastung gering.

Das erfindungsgemäße Verfahren hat besondere Bedeutung für solche Farbstoffe I, in denen Ar beispielsweise für Chlorphenyl, Dichlorphenyl, Bromphenyl, Tolyl, Methoxyphenyl, Ethoxyphenyl oder Dimethylaminophenyl, vorzugsweise für Phenyl, steht und die sich von folgenden Aminoanthrachinonen III ableiten:

- 1,4-, 1,5-, 1,8-, 2,6-Diaminoanthrachinonen,
- 1-Amino-4-alkoxyanthrachinonen, vorzugsweise 1-Amino-4-methoxyanthrachinon,
- 1-Amino-4-(oder 5)-aroylaminoanthrachinonen oder ihren Chlor-, Brom- oder Methoxyderivaten, vorzugsweise 1-Amino-5-benzoylaminoanthrachinon,
- bevorzugt von 1- oder 2-Aminoanthrachinonen oder ihren Chlor- oder Bromderivaten,

- besonders bevorzugt von 1,4-Diamino-2-acetylanthrachinon.

Eine besonders bevorzugte Anwendung dieses Verfahrens besteht in der Herstellung des oben erwähnten Vat Blue 66.

Beispiele

Herstellung von Farbstoffen der Formel

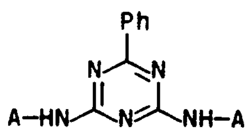

(Ph: Phenyl)

Eine Lösung aus a mol eines Aminoanthrachinons III und b g eines Lösungsmittels L wurde bei $T_1$ °C innerhalb von 45 min mit 0,18 mol 2-Phenyl-4,6-dichlor-1,3,5-triazin (II) versetzt, $t_1$ Stunden bei $T_1$ °C gehalten und nach einer Aufheizzeit von 2 h $t_2$ Stunden bei $T_2$ °C nachgerührt.

Danach wurde die Lösung auf 60 bis 70 °C abgekühlt, wobei der Farbstoff I ausfiel. Der Niederschlag wurde abgetrennt, zunächst mit dem Lösungsmittel L und dann mit Wasser gewaschen und anschließend getrocknet.

Die Einzelheiten dieser Versuche sowie deren Ergebnisse sind der nachstehenden Tabelle zu entnehmen.

Tabelle

| Beispiel | Antrachinon III | a mol | Lösungsmittel L | b g | $T_1$ °C | $t_1$ h | $T_2$ °C | $t_2$ h | Ausbeute an I |
|---|---|---|---|---|---|---|---|---|---|
| 1 | 1,4-Diamino-2-acetyl | 0,27 | N-Methylpyrrolid-2-on | 250 | 120 | 2,5 | 150 | 2 | 98 % |
| 2 | " | 0,27 | " | 190 | 120 | 2,5 | 150 | 2 | 98 % |
| 3 | " | 0,27 | " | 375 | 120 | 2,5 | 150 | 2 | 98 % |
| 4 | " | 0,27 | " | 250 | 100 | 3 | 150 | 2 | 98 % |
| 5 | " | 0,27 | " | 250 | 130 | - | 130 | 4-5 | 98 % |
| 6 | " | 0,27 | " | 250 | 160 | - | 160 | 4-5 | 98 % |
| 7 | " | 0,27 | 1,3-Dimethyl-imidazolid-2-on | 250 | 120 | 2,5 | 150 | 2 | 94 % |
| 8 | " | 0,27 | 1,3-Dimethyltetrahydro--2(1H)-pyrimidin-2-on | 250 | 120 | 2,5 | 150 | 2 | 92 % |
| 9 | " | 0,27 | Tetramethylharnstoff | 250 | 120 | 2,5 | 150 | 2 | 92 % |
| 10 | 1-Amino | 0,24 | N-Methylpyrrolid-2-on | 250 | 120 | 2,5 | 150 | 2 | 72 % |
| 11 | 2-Amino | 0,24 | " | 250 | 120 | 2,5 | 150 | 2 | 92 % |

## Patentansprüche

1. Verfahren zur Herstellung von Anthrachinonfarbstoffen der allgemeinen Formel I

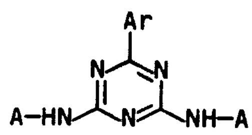

I

in der Ar für eine Arylgruppe steht und die Reste A Anthrachinonylreste bedeuten, durch Umsetzung eines Aryldihalogentriazins der allgemeinen Formel II

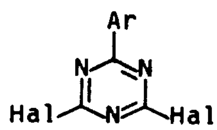

II

in der Hal Chlor oder Brom bedeutet, mit einem Aminoanthrachinon III

$A\text{-}NH_2$ III

in einem organischen Lösungsmittel, dadurch gekennzeichnet, daß man hierfür als Lösungsmittel N-$C_1$-$C_4$-Alkylpyrrolid-2-one oder N-$C_1$-$C_4$-Alkylpiperid-2-one, N-Di-$C_1$-$C_4$-alkylacetamide oder N-Di-$C_1$-$C_4$-alkylpropionsäureamide oder Harnstoffderivate der Formel IV

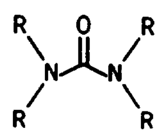

IV

in der die Reste R gleiche oder verschiedene Alkylgruppen mit 1 bis 4 C-Atomen bedeuten, die auch unter Ausbildung eines die Harnstoffgruppierung enthaltenden 5- oder 6-gliedrigen Ringes miteinander verbunden sein können, verwendet.

2. Verfahren nach Anspruch 1, dadurch gekennzeichnet, daß man als organisches Lösungsmittel N-Methylpyrrolidon, Tetramethylharnstoff, Tetraethylharnstoff, 1,3-Dimethylimidazolidin-2-on, 1,3-Dimethyl-tetrahydro-2(1H)-pyrimidinonoder Dimethylacetamid verwendet.

3. Verfahren nach den Ansprüchen 1 oder 2, dadurch gekennzeichnet, daß man es zur Herstellung eines Farbstoffes der Formel I anwendet, in der Ar die Phenylgruppe und A 1-Amino-2-acetylanthrachinon-4-ylreste, bedeuten.

4. Verfahren nach den Ansprüchen 1 bis 3, dadurch gekennzeichnet, daß man die Umsetzung bei 80 bis 180 ° C durchführt.

## Claims

1. A process for preparing an anthraquinone dyes of the general formula I

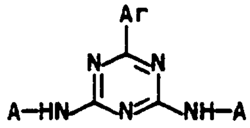

I

where Ar is aryl and the A radicals are each anthraquinonyl, by reacting an aryldihalotriazine of the general formula II

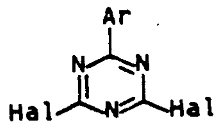

II

where Hal is chlorine or bromine, with an aminoanthraquinone III

$A\text{-}NH_2$ III

in an organic solvent, characterized in that the solvent used is selected from N-$C_1$-$C_4$-alkylpyrrolid-2-ones, N-$C_1$-$C_4$-alkylpiperid-2-ones, N-di-$C_1$-$C_4$-alkylacetamides or N-di-$C_1$-$C_4$-alkylpropionamides or urea derivatives of the formula IV

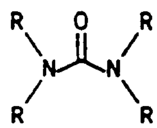

IV

where the radicals R are identical or different alkyl groups of from 1 to 4 carbon atoms which can also be linked to one another to form a 5- or 6-membered ring containing the urea group.

**2.** A process as claimed in claim 1, characterized in that the organic solvent used is N-methylpyrrolidone, tetramethylurea, tetraethylurea, 1,3-dimethylimidazolidin-2-one, 1,3-dimethyltetrahydro-2(1H)-pyrimidinone or dimethylacetamide.

**3.** A process as claimed in claim 1 or 2, characterized in that it is used for preparing a dye of the formula I where Ar is phenyl and A is 1-amino-2-acetylanthraquinon-4-yl.

**4.** A process as claimed in claim 1 or 2 or 3, characterized in that the reaction is carried out at from 80 to 180 °C.

**Revendications**

**1.** Procédé de préparation de colorants anthraquinoniques de formule générale I

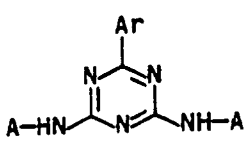

I

dans laquelle Ar est mis pour un groupement aryle et les restes A représentent des restes anthraquinonyle, par réaction d'une aryldihalogénotriazine de formule générale II

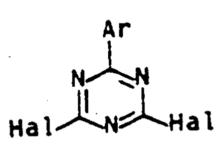

II

dans laquelle Hal représente le chlore ou le brome, avec une aminoanthraquinone III

A-$NH_2$ III

dans un solvant organique, caractérisé en ce qu'on utilise ici comme solvant une N-(alkyl en $C_1$-$C_4$)-pyrrolid-2-one ou une N-(alkyl en $C_1$-$C_4$)pipérid-2-one, un N-di-(alkyl en $C_1$-$C_4$)acétamide ou un N-di-(alkyl en $C_1$-$C_4$)propionamide ou un dérivé d'urée de formule IV

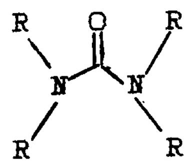

IV

dans laquelle les restes R représentent des groupements alkyle identiques ou différents ayant de 1 à 4 atomes de carbone, qui peuvent également être unis l'un à l'autre par formation d'un noyau à 5 ou 6 chaînons contenant le groupement urée.

**2.** Procédé selon la revendication 1, caractérisé en ce qu'on utilise comme solvant organique la N-méthylpyrrolidone, la tétraméthylurée, la tétraéthylurée, la 1,3-diméthylimidazolidin-2-one, la 1,3-diméthyltétrahydro-2(1H)pyrimidinone ou le diméthylacétamide.

**3.** Procédé selon l'une ou l'outre des revendications 1 et 2, caractérisé en ce qu'on l'utilise pour la préparation d'un colorant de formule I dans laquelle Ar représente des groupements phényle et A un reste 1-amino-2-acétylanthraquinone-4-yle.

**4.** Procédé selon l'une quelconque des revendications 1 à 3, caractérisé en ce qu'on effectue la réaction à 80-180 °C.